# EUROPÄISCHE PATENTSCHRIFT

(11) **EP 0 978 759 B1**
(45) Veröffentlichungstag und Bekanntmachung des Hinweises auf die Patenterteilung: **27.03.2002**
(21) Anmeldenummer: 99113467.7
(22) Anmeldetag: 13.07.1999
(51) Int. Cl.: G03B 27/72, G03B 27/73, H05B 33/08, B41J 2/45

(54) **Vorrichtung zum Belichten von fotografischem Aufzeichnungsmaterial mittels Leuchtdioden**
Device for exposing photographic recording material using LED's
Dispositif pour exposer un support d'enregistrement photographique par diodes électroluminescentes

(30) Priorität: 04.08.1998 DE 19835159
(43) Veröffentlichungstag der Anmeldung: 09.02.2000
(73) Patentinhaber: Agfa-Gevaert Aktiengesellschaft, 51373 Leverkusen (DE)
(72) Erfinder: Fuchsberger, Hermann, 85737 Ismaning (DE); Maier, Franz, 80686 München (DE); Reckziegel, Roland, 82515 Wolfratshausen (DE)

(56) Entgegenhaltungen:
- EP-A- 0 691 568
- GB-A- 2 131 589
- US-A- 4 818 983
- US-A- 4 927 778
- US-A- 5 150 016
- US-A- 5 151 718
- PATENT ABSTRACTS OF JAPAN vol. 1998, no. 01, 30. Januar 1998 (1998-01-30) -& JP 09 246602 A (MATSUSHITA ELECTRON CORP), 19. September 1997 (1997-09-19)

## Beschreibung

Die vorliegende Erfindung betrifft eine Vorrichtung zum Belichten von fotografischem Aufzeichnungsmaterial gemäß dem Oberbegriff des Anspruchs 1.

Eine solche Vorrichtung ist aus der europäischen Patentanmeldung EP 0 691 568 A1 bekannt. Diese vorveröffentlichte Patentanmeldung offenbart einen fotografischen Printer zum Aufbelichten von einzelnen Bildern eines fotografischen Films auf Fotopapier. Dazu weist der fotografische Printer eine Belichtungsstation auf, die eine Matrix von Leuchtdioden als Lichtquelle enthält. Die Leuchtdioden emittieren Licht in roter, grüner und blauer Farbe. Mit der Lichtquelle der Belichtungsstation werden die einzelnen Bilder des fotografischen Filmes beleuchtet, so daß das jeweilige Bild auf das Fotopapier projiziert wird. In den Strahlengang der Belichtungsstation ist ein Spiegel eingebracht, der einen Teil des Lichtes auskoppelt und auf einen Bildsensor wirft. Mittels dieses Bildsensors wird eine fotometrische Messung der einzelnen Bildpunkte des auf das Fotopapier zu projizierenden Bildes durchgeführt. Diese Messung findet getrennt in den drei Hauptfarben rot, grün und blau statt. Die von dem Bildsensor erzeugten Signale werden dazu auf verschiedene Auswerte- und Steuerschaltungen gegeben. Auf diese Weise wird die für die korrekte Belichtung des jeweiligen Bildes auf Fotopapier benötigte Belichtungsmenge bestimmt. Über eine Treiberschaltung wird jede einzelne Leuchtdiode mit einem eigenen Treibersignal angesteuert. Das jeweilige Treibersignal bestimmt die Lichtintensität und -dauer der jeweiligen Leuchtdiode. Dadurch soll eine sehr exakte Belichtung der Bilder auf das Fotopapier ermöglicht werden. Aufgrund der Einzelansteuerung der Leuchtdioden soll es insbesondere möglich sein, Ungenauigkeiten der Lichtquelle auszugleichen.

Ähnliche Anordnungen sind aus der europäischen Patentanmeldung EP 0 424 175 A2 und der deutschen Patentschrift DE 43 08 864 C2 bekannt. Auch dort werden Leuchtdioden für die Belichtung von fotosensitiven Materialien verwendet. Diese Leuchtdioden werden jeweils mit einem eigenen Belichtungssignal angesteuert.

Die Verwendung von Leuchtdioden in einem Belichtungsmittel zum Belichten von fotografischem Aufzeichnungsmaterial ist vorteilhaft, da diese Leuchtdioden schnell schaltbar und direkt ansteuerbar sind. Ein Verschluß zum Verschließen des Belichtungsstrahlengangs kann daher eingespart werden. Insbesondere dieser Verschluß unterliegt sehr hohen mechanischen Anforderungen. Des weiteren sind die Leuchtdioden in den drei Hauptfarben rot, grün und blau verfügbar, so daß spezielle Farbfilter zum Belichten des Aufzeichnungsmaterials nicht notwendig sind.

Für die Realisierung eines Belichtungsmittels zum Belichten von fotografischem Aufzeichnungsmaterial, bei dem Leuchtdioden verwendet werden sollen, um die oben beschriebenen Vorteile zu erzielen, ist es wichtig, eine genügend große Leuchtstärke des Belichtungsmittels zu gewährleisten, um dadurch kurze Belichtungszeiten erzielen zu können.

Die heute verfügbaren Leuchtdioden mit ihren begrenzten Strahlungsintensitäten und Aufzeichnungsmaterialien mit ihren vorgegebenen Lichtempfindlichkeiten machen es notwendig, daß in dem Belichtungsmittel eine hohe Anzahl von Leuchtdioden, insbesondere für den roten Spektralbereich des Lichts, vorhanden ist. Da jede dieser Leuchtdioden im Betrieb einen vorgegebenen Strom verbraucht, der bei vielen Arten von Leuchtdioden typischerweise ca. 100 mA beträgt, muß bei den bekannten Anordnungen gemäß des Standes der Technik eine hohe Stromzufuhr bei der Belichtung des fotografischen Aufzeichnungsmaterials zur Verfügung gestellt werden. Der im Betrieb benötigte Strom kann daher ohne weiteres mehr als 50 A betragen. Ein solcher hoher Strom ist in der Praxis sehr schwer zu handhaben, insbesondere dann, wenn die Leuchtdioden in Bereichen von einigen µs ein- und ausgeschaltet werden sollen.

Aus der vorveröffentlichten japanischen Patentanmeldung JP 9-246602 und dem zugehörigen Patent Abstracts of Japan, Publication Number 09246602, ist ein Belichtungsmittel bekannt, das eine Vielzahl von parallel geschalteten Leuchtdiodenzweigen aufweist, die jeweils mehrere in Reihe geschaltete Leuchtdioden enthalten. Die einzelnen Leuchtdioden sind auf einer Leiterplatte miteinander verschaltet. In Reihe zu der Parallelschaltung der Leuchtdiodenzweige befindet sich ein Widerstand, der im wesentlichen den Stromfluß durch die Leuchtdioden bestimmt.

Aus der GB 2 131 589 A ist ein elektronisches Display bekannt. Dieses Display enthält eine Vielzahl von diskreten Leuchtdioden, die ebenfalls auf einer Leiterplatte angeordnet sind. Die Leuchtdioden können so verschaltet sein, daß mehrere Parallelschaltungszweige in Reihe geschaltet sind. In den Parallelschaltungszweigen wiederum sind mehrere Leuchtdioden parallel angeordnet. In Reihe zu den verschiedenen Parallelschaltungszweigen befindet sich ein Widerstand zur Strombegrenzung. Den einzelnen Leuchtdioden der jeweiligen Parallelschaltungszweige sind keine weiteren Widerstände zugeordnet, so daß für die Stromverteilung innerhalb der Parallelschaltungszweige die jeweiligen Durchlaßwiderstände der Leuchtdioden maßgeblich sind. Da die Durchlaßwiderstände der diskreten Leuchtdioden allerdings mehr oder weniger stark unterschiedlich sind, sind die Ströme durch die einzelnen Leuchtdioden der Parallelschaltungszweige ebenfalls unterschiedlich. Dies führt zu verschiedenen Belastungen der Leuchtdioden im Betrieb. Diejenigen Leuchtdioden mit geringen Durchlaßwiderständen leiten den größten Strom. Gerade diese Leuchtdioden altern daher schneller, als diejenigen Leuchtdioden mit großem Durchlaßwiderstand. Des Weiteren ist auch die Lichtemission der einzelnen Leuchtdioden unterschiedlich.

Der vorliegenden Erfindung liegt die Aufgabe zugrunde, in einer Vorrichtung zum Belichten von fotografischem Aufzeichnungsmaterial ein Belichtungsmittel mittels Leuchtdioden zu realisieren, das eine genügend hohe Intensität für eine Belichtung von Aufzeichnungsmaterial zur Verfügung stellt.

Diese Aufgabe wird gemäß der technischen Lehre des Anspruchs 1 gelöst.

Aufgrund der Erfindung ist es vorteilhafterweise möglich, eine große Anzahl von Leuchtdioden in dem Belichtungsmittel vorzusehen, durch die eine hohe Lichtstärke und dementsprechend kurze Belichtungszeiten ermöglicht werden. Auf diese Weise kann eine besonders effektive und schnelle Vorrichtung zum Belichten von fotografischem Aufzeichnungsmaterial zur Verfügung gestellt werden. Des Weiteren sind die von der erfindungsgemäßen Vorrichtung zum Betreiben der Leuchtdioden benötigte Spannung und der benötigte Strom auf Werte begrenzt, die den technischen Aufwand und die dadurch entstehenden Kosten für die Handhabung hoher Spannungen und Ströme gering halten. Aufgrund der erfindungsgemäßen Vorrichtung kann die Ansteuerung der Leuchtdioden vereinfacht und der Verdrahtungsaufwand gegenüber den bekannten Anordnungen gemäß dem Stand der Technik reduziert werden. Die Reihenschaltung der mehreren Parallelschaltungszweige, die jeweils mehrere parallel geschaltete Leuchtdioden aufweisen, gewährleistet eine sehr hohe Ausfallsicherheit, da auch bei Ausfall einer Leuchtdiode in einem der Parallelschaltungszweige die anderen Leuchtdioden des Parallelschaltungszweigs weiterhin funktionsfähig sind. Der Ausfall einer Leuchtdiode führt daher nicht zum Ausfall des gesamten Parallelschaltungszweiges. Da die Leuchtdioden der einzelnen Parallelschaltungszweige gemeinsam auf einem Wafer integriert sind, ensteht eine besonders kompakte Anordnung mit einer gleichmäßigen Lichtintensitätsverteilung entsteht. Darüber hinaus wird durch diese integrierte Realisierung des erfindungsgemäßen Belichtungsmittels der Verdrahtungsaufwand besonders gering gehalten.

Vorteilhafterweise wird in der erfindungsgemäßen Vorrichtung ein Einstellmittel zur Einstellung des von einer oder mehreren Leuchtdioden im Betrieb aussendbaren Lichts vorgesehen. Mit diesem Einstellmittel kann insbsondere die Lichtintensität eingestellt werden. Dadurch wird ermöglicht, die Qualität der Belichtung des Aufzeichnungsmaterials zu verbessern, da Belichtungsungenauigkeiten ausgeregelt werden können. Solche Belichtungsungenauigkeiten können beispielsweise durch den Ausfall einer Leuchtdiode oder mehrerer Leuchtdioden auftreten. Dieser Ausfall kann durch das Einstellmittel kompensiert werden, indem die Intensität des von einer oder mehreren der weiterhin betriebsfähigen Leuchtdioden emittierten Lichts entsprechend eingestellt wird.

In einer weiteren vorteilhaften Ausgestaltung wird ein solches Einstellmittel in jedem der Reihenschaltungs- oder Parallelschaltungszweige eingesetzt. Dadurch wird erreicht, daß die Einstellung des von den Leuchtdioden emittierten Lichts weiter verbessert wird. Die Einstellung des Lichts kann z. B. auf bestimmte lokale Bereiche des Belichtungsmittels begrenzt werden.

Einfachheitshalber kann als Einstellmittel eine regelbare Stromquelle benutzt werden. Mit dieser wird einer Leuchtdiode oder mehreren Leuchtdioden ein Strom eingeprägt, der die von den Leuchtdioden abgegebene Lichtintensität bestimmt. Als Regelgröße kann beispielsweise eine gewünschte Lichtintensitätsverteilung dienen, mit der die regelbare Stromquelle angesteuert wird.

Weitere vorteilhafte Ausführungen der Erfindung sind den abhängigen Ansprüchen zu entnehmen.

Im folgenden werden die Erfindung und ihre Vorteile anhand von Ausführungsbeispielen beschrieben. Es zeigen:
- Fig. 1: ein Ahwendungsbeispiel der erfindungsgemäßen Vorrichtung in einer digitalen Bilderzeugungseinrichtung und
- Fig. 2: ein Ausführungsbeispiel des erfindungsgemäßen Belichtungsmittels.

Im folgenden werden für gleiche und gleich wirkende Elemente durchweg gleiche Bezugszeichen verwendet.

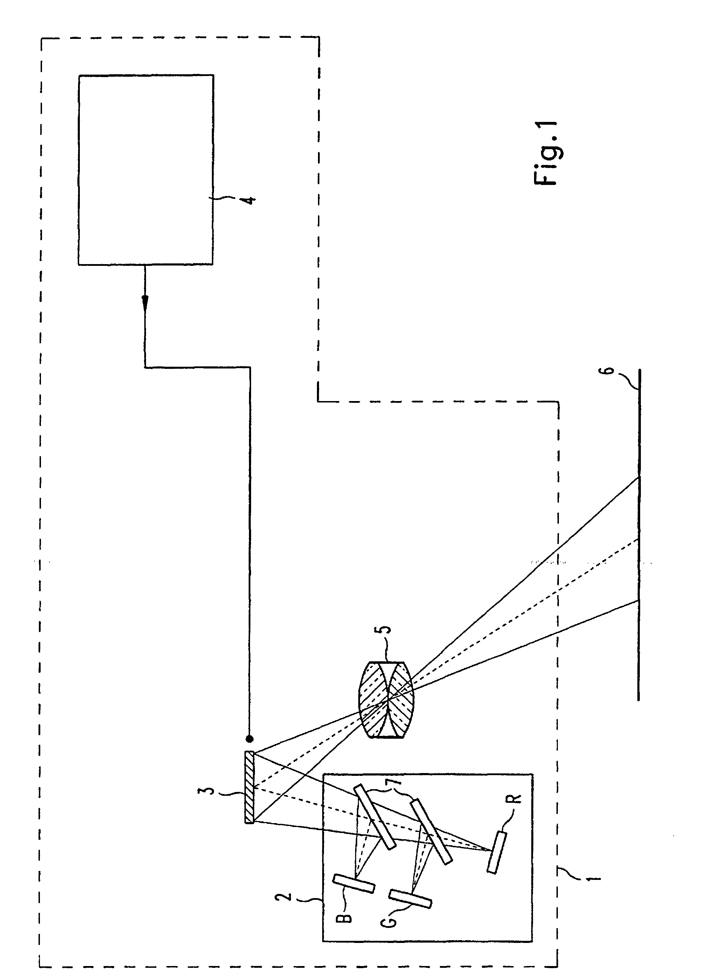

Fig. 1 zeigt ein Anwendungsbeispiel für eine erfindungsgemäße Vorrichtung zum Belichten von fotografischem Aufzeichnungsmaterial in Form einer digitalen Bilderzeugungseinrichtung 1. Mit dieser digitalen Bilderzeugungseinrichtung 1 können Bildinformationen, die als digitale Daten vorliegen, auf ein fotografisches Aufzeichnungsmaterial aufbelichtet werden, welches im vorliegenden Beispiel herkömmliches Fotopapier 6 ist. Es könnten aber ebenso andere, lichtempfindliche Aufzeichnungsmaterialien verwendet werden, wie z.B. lichtempfindliche Lacke. Die digitale Bilderzeugungseinrichtung 1 weist eine Lichtquelle 2 auf, mit der Licht auf einen pixelweise ansteuerbaren Lichtmodulator 3 gerichtet werden kann. Der Lichtmodulator 3 ist im vorliegenden Beispiel ein Digital Micromirror Device, DMD. Ein solches DMD ist beispielsweise aus der europäischen Patentanmeldung EP 0 738 910 A2 bekannt. DMDs bestehen aus einer Vielzahl von Spiegeln, die einzeln ansteuerbar sind und Licht, das auf diese Spiegel gerichtet ist, für eine bestimmte Zeit reflektieren. Das DMD 3 ist hier so ausgerichtet, daß das reflektierte Licht über ein Objektiv 5 auf das Fotopapier 6 geworfen wird.

Für die pixelweise Ansteuerung des DMD 3 weist die digitale Bilderzeugungseinrichtung 1 ein Steuermittel 4 auf. Das Steuermittel 4 enthält einen Speicher, in dem die digitalen Daten, die die Bildinformationen enthalten, abgespeichert sind. Diese digitalen Daten können beispielsweise die Bildinformationen eines Indexprints enthalten. Die digitalen Daten mit den Bildinformationen werden von dem Steuermittel 4 in Ansteuersignale zur Ansteuerung des DMD 3 umgewandelt. Jeder Spiegel des DMD 3 wird mittels eines eigenen Ansteuersignales angesteuert, so daß er in eine vorgegebene Position geschwenkt werden kann. Auf diese Weise wird das auf das DMD 3 gerichtete Licht entsprechend der Bildinformationen moduliert. Aufgrund der Lichtmodulation durch das DMD 3 werden auf dem Fotopapier 6 unterschiedliche Graustufen erzeugt. Es ist daher möglich, auf dem Fotopapier 6 ein Abbild der Bildinformationen darzustellen. Anstelle des reflektierenden Lichtmodulators in Form eines DMD 3 kann ebenfalls ein transmissiver Lichtmodulatur, wie beispielsweise ein LCD, verwendet werden. Dabei muß allerdings gewährleistet sein, daß die Lichtquelle 2 Licht genügend hoher Intensität emittieren kann, da der transmissive Lichtmodulator üblicherweise einen Teil des Lichts absorbiert.

Im vorliegenden Beispiel enthält die Lichtquelle 2 für die Erzeugung des Lichts Leuchtdioden (LED) in den drei Hauptfarben rot, grün und blau. Diese Leuchtdioden sind in drei verschiedenen LED-Arrays zusammengefaßt, von denen das erste LED-Array R alle roten Leuchtdioden, das zweite LED-Array G alle grünen Leuchtdioden und das dritte LED-Array B alle blauen Leuchtdioden enthält. Das von den LED-Arrays R, G und B emittierte Licht in den drei Hauptfarben wird über zwei dichroitische Spiegel 7 zusammengeführt und auf das DMD 3 gerichtet. Das grüne und das blaue LED-Array G bzw. B enthalten, abhängig von der Kopierleistung der digitalen Bilderzeugungseinrichtung 1 und der jeweiligen Leistung der Leuchtdioden, etwa 50 bis 100 einzelne Leuchtdioden. Für das rote LED-Array R sind ca. 500 Leuchtdioden vorgesehen, da die Empfindlichkeit des Fotopapiers 6 im roten Spektralbereich besonders gering ist. Die drei LED-Arrays sind einzeln ansteuerbar, so daß die einzelnen Farbanteile des abzubildenden Bildes entweder nacheinander oder gemischt auf das Fotopapier 6 aufbelichtet werden können. Die Lichtintensität, die von dem einzelnen LED-Array abgegeben werden soll, um eine korrekte Belichtung des Fotopapiers zu erzielen, wird über eine nicht dargestellte Belichtungssteuerungseinheit vorgegeben. Verfahren zur Bestimmung und Einstellung dieser erforderlichen Lichtintensität sind bekannt

Erfindungsgemäß sind die vielen Leuchtdioden der jeweiligen LED-Arrays R, G und B in einer Kombination aus Reihenschaltungen und Parallelschaltungen miteinander verschaltet. Auf diese Weise kann sowohl die zum Betreiben der einzelnen LED-Arrays zur Verfügung zu stellende Versorgungsspannung als auch der im Betrieb von den LED-Arrays benötigte Strom begrenzt werden. Typische Leuchtdioden werden bei ca. 2,2 V und 100 mA betrieben. Eine Parallelschaltung aller Leuchtdioden würde daher bei einer entsprechend hohen Anzahl von Leuchtdioden zu einem hohen Strom führen. Dieser würde bei 500 Leuchtdioden ca. 50 A betragen. Eine Reihenschaltung der Leuchtdioden würde eine hohe Versorgungsspannung von etwa 1000 V erforderlich machen. Solch hohe Spannungen und Ströme sind in der Praxis schwer handhabbar, insbesondere dann, wenn die Leuchtdioden mit Zeiten von einigen µs eingeschaltet und geregelt werden sollen.

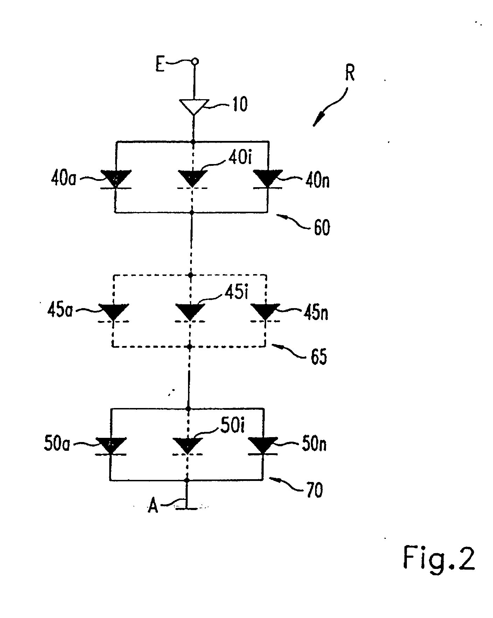

Fig. 2 zeigt ein Ausführungsbeispiel der vorliegenden Erfindung, in dem mehrere Leuchtdioden 40a-40n, ..., 45a-45n, ..., 50a-50n in mehreren Parallelschaltungszweigen 60-70 parallel geschaltet und diese Parallelschaltungszweige 60-70 wiederum in Reihe geschaltet sind.

Die Leuchtdioden der einzelnen Parallelschaltungszweige sind hier gemeinsam auf einem Waferstück ausgebildet. Dadurch kann eine hohe Packungsdichte der verschiedenen Leuchtdioden der Reihenschaltungszweige erreicht werden. Darüber hinaus werden keine Verbindungsleitungen zwischen den einzelnen Leuchtdioden der Reihenschaltungszweige benötigt, so daß parasitäre Kapazitäten und der Aufwand für das Bonden gering gehalten werden. Des weiteren ist die Anzahl der Leuchtdioden in den jeweiligen Parallelschaltungszweigen 60-70 vorteilhafterweise gleich. Dadurch läßt sich auch hier eine gleichmäßige Lichtverteilung erreichen.

Den in Reihe geschalteten Parallelschaltungszweigen 60-70 ist eine regelbare, zentrale Stromquelle 10 vorgeschaltet, mit welcher der Gesamtstrom, der der Schaltungskombination der Leuchtdioden 40a-40n, ..., 50a-50n zugeführt werden soll, vorgegeben. Die zentrale Stromquelle 10 kann dazu verwendet werden, die Intensität des von der Gesamtheit der Leuchtdioden des LED-Arrays R emittierten Lichtes zu regeln. Es ist auch möglich, zur besseren lokalen Regelung der Lichtemission in die verschiedenen Parallelschaltungszweige 60-70 solche regelbaren Stromquellen einzusetzen.

Die Anzahl der Leuchtdioden in den verschiedenen Zweigen der LED-Arrays R, G oder B kann beliebig festgelegt werden und wird bestimmt durch die Lichtintensität der einzelnen Leuchtdioden, die Empfindlichkeit des zu belichtenden Fotopapiers und die gewünschte Leistungsfähigkeit der digitalen Bilderzeugungseinrichtung 1. Die Lichtintensität der einzelnen LED-Arrays R, G und B muß umso höher sein, je größer die Leistung der digitalen Bilderzeugungseinrichtung 1 sein soll. Die Leistungsfähigkeit der digitalen Bilderzeugungseinrichtung 1 bestimmt, wie hoch die Anzahl der Bilder ist, die in einer bestimmten Zeiteinheit, beispielsweise einer Minute, von der Bilderzeugungseinrichtung 1 auf das Fotopapier 6 belichtet werden kann.

Die Anordnung der Leuchtdioden, wie sie in dem Ausführungsbeispiel gemäß der Fig. 2 beschrieben wurde, hat den Vorteil, daß sie eine sehr hohe Ausfallsicherheit bietet, wenn eine der Leuchtdioden zerstört ist und daher eine Unterbrechung darstellt. In dem Fall des zweiten Ausführungsbeispiels bedeutet dies nämlich, daß trotz der Zerstörung einer Leuchtdiode in einem der Parallelschaltungszweige 60-70 die anderen Leuchtdioden des jeweiligen Parallelschaltungszweiges weiterhin Licht emittieren können. Allerdings ist anzumerken, daß bei Ausfall eines kompletten Parallelschaltungszweiges die Funktionsweise des gesamten LED-Arrays R unterbrochen ist.

## Patentansprüche

1. Vorrichtung (1) zum Belichten von fotografischem Aufzeichnungsmaterial (6) mit einem Belichtungsmittel (2), das eine Vielzahl von Leuchtdioden (40a-40n, ..., 50a-50n) aufweist, **dadurch gekennzeichnet, daß** die Leuchtdioden (40a-40n, ..., 50a-50n) in einer Kombination aus wenigstens einer Reihenschaltung und wenigstens einer Parallelschaltung miteinander verschaltet sind, wobei mehrere Parallelschaltungszweige (60-70), in denen jeweils mehrere Leuchtdioden (40a-40n, ..., 50a-50n) parallel geschaltet sind, in Reihe geschaltet und die Leuchtdioden (40a-40n, ..., 50a-50n) der einzelnen Parallelschaltungszweige (60-70) jeweils gemeinsam auf einem Waferstück ausgebildet sind.

2. Vorrichtung nach Anspruch 1, **dadurch gekennzeichnet, daß** die Anzahl der parallel geschalteten Leuchtdioden (40a-40n, ..., 50a-50n) in den Parallelschaltungszweigen (60-70) jeweils gleich ist.

3. Vorrichtung nach einem der Ansprüche 1 oder 2, **dadurch gekennzeichnet, daß** ein Einstellmittel (10) zur Einstellung des von einer Leuchtdiode oder mehreren Leuchtdioden (40a-40n, ..., 50a-50n) im Betrieb aussendbaren Lichts vorhanden ist.

4. Vorrichtung nach Anspruch 3, **dadurch gekennzeichnet, daß** in den Parallelschaltungszweigen (60-70) jeweils ein solches Einstellmittel (10) vorhanden ist.

5. Vorrichtung nach Anspruch 3 oder 4, **dadurch gekennzeichnet, daß** das Ein-stellmittel (10) eine regelbare Stromquelle ist.

6. Vorrichtung nach einem der Ansprüche 1 bis 5, **dadurch gekennzeichnet, daß** das durch die einzelnen Leuchtdioden (40a-40n, ..., 50a-50n) im Betrieb aussendbare Licht ein Intensitätsmaximum im blauen, grünen oder roten Wellenlängenbereich des Spektrums hat.

7. Vorrichtung nach Anspruch 6, **dadurch gekennzeichnet, daß**
- sie drei Belichtungsmittel (R, G, B) aufweist und
- das durch die Leuchtdioden des ersten Belichtungsmittels (B) im Betrieb aussendbare Licht ein Intensitätsmaximum im blauen Wellenlängenbereich des Spektrums hat,
- das durch die Leuchtdioden des zweiten Belichtungsmittels (G) im Betrieb aussendbare Licht ein Intensitätsmaximum im grünen Wellenlängenbereich des Spektrums hat und
- das durch die Leuchtdioden des dritten Belichtungsmittels (R) im Betrieb aussendbare Licht ein Intensitätsmaximum im roten Wellenlängenbereich des Spektrums hat.

8. Vorrichtung nach einem der Ansprüche 1 bis 7, **dadurch gekennzeichnet, daß** sie einen Lichtmodulator (3) mit einer Vielzahl einzeln ansteuerbarer Bereiche aufweist, der so angeordnet ist, daß das von den Leuchtdioden (40a-40n, ..., 50a-50n) im Betrieb aussendbare Licht auf diesen Lichtmodulator (3) gerichtet ist.

9. Vorrichtung nach Anspruch 8, **dadurch gekennzeichnet, daß** der Lichtmodulator (3) ein sogenanntes Digital Micromirror Device, DMD, ist.

## Claims

1. Device (1) for exposing photographic recording material (6) comprising an exposure means (2) which has a plurality of light-emitting diodes (40a to 40n, ..., 50a to 50n), **characterised in that** the light-emitting diodes (40a to 40n, ..., 50a to 50n) are connected to one another in a combination of at least one series connection and at least one parallel connection, a plurality of parallel connection branches (60 to 70), in which a plurality of light-emitting diodes (40a to 40n, ..., 50a to 50n) are connected in parallel respectively, are connected in series and the light-emitting diodes (40a to 40n, ..., 50a to 50n) of the individual parallel circuit branches (60 to 70) are formed together on a respective wafer.

2. Device according to claim 1, **characterised in that** the number of light-emitting diodes (40a to 40n, ..., 50a to 50n) connected in parallel is equal in each parallel connection branch (60 to 70).

3. Device according to any of claims 1 or 2, **characterised in that** there is an adjusting means (10) for adjusting the light which can be emitted by a light-emitting diode or a plurality of light-emitting diodes (40a to 40n, ..., 50a to 50n) during operation.

4. Device according to claim 3, **characterised in that** there is a respective adjusting means (10) of this type in the parallel connection branches (60 to 70).

5. Device according to claim 3 or 4, **characterised in that** the adjusting means (10) is a controllable power source.

6. Device according to any of claims 1 to 5, **characterised in that** the light which can be emitted by the individual light-emitting diodes (40a to 40n, ..., 50a to 50n) during operation has an intensity peak in the blue, green or red wavelength range of the spectrum.

7. Device according to claim 6, **characterised in that** it comprises three exposure means (R, G, B) and the light which can be emitted by the light-emitting diodes of the first exposure means (B) during operation has an intensity peak in the blue wavelength range of the spectrum, the light which can be emitted by the light-emitting diodes of the second exposure means (G) during operation has an intensity peak in the green wavelength region of the spectrum and the light which can be emitted by the light-emitting diodes of the third exposure means (R) during operation has an intensity peak in the red wavelength range of the spectrum.

8. Device according to any of claims 1 to 7, **characterised in that** it comprises a light modulator (3) with a plurality of individually controllable regions, which is arranged in such a way that the light which can be emitted by the light-emitting diodes (40a to 40n, ..., 50a to 50n) during operation is directed on to this light modulator (3).

9. Device according to claim 8, **characterised in that** the light modulator (3) is a so-called digital micro mirror device, DMD.

## Revendications

1. Appareil (1) pour exposer à la lumière le matériau d'enregistrement photographique (6) avec un moyen d'exposition (2) présentant un grand nombre de diodes luminescentes (40a-40n, ..., 50a-50n), **caractérisé en ce que** les diodes luminescentes (40a-40n, ..., 50a-50n) sont reliées entre elles en une combinaison d'au moins un montage en série et au moins un montage en parallèle, où plusieurs branches du montage en parallèle (60-70) dans lesquelles plusieurs diodes (40a-40n, ..., 50a-50n) sont montées en parallèle chaque fois, sont montées en série et où les diodes luminescentes (40a-40n, ..., 50a-50n) de chacune des branches du montage en parallèle (60-70) sont installées chaque fois toutes sur une même plaquette.

2. Appareil selon la revendication 1, **caractérisé en ce que** le nombre de diodes luminescentes montées en parallèle (40a-40n, ..., 50a-50n) est chaque fois le même dans les branches du montage en parallèle (60-70).

3. Appareil selon la revendication 1 ou 2, **caractérisé en ce qu'**un moyen de réglage (10) pour régler la lumière pouvant être émise par une diode ou plusieurs diode(s) luminescente(s) (40a-40n, ..., 50a-50n) en fonctionnement est disponible.

4. Appareil selon la revendication 3, **caractérisé en ce qu'**un tel moyen de réglage (10) est disponible chaque fois dans les branches du montage en parallèle (60-70).

5. Appareil selon la revendication 3 ou 4, **caractérisé en ce que** le moyen de réglage (10) est une source réglable de courant électrique.

6. Appareil selon l'une des revendications 1 à 5, **caractérisé en ce que** la lumière pouvant être émise par chacune des diodes luminescentes (40a-40n, ..., 50a-50n) en fonctionnement a une intensité maximale dans le domaine de longueurs d'ondes bleu, vert ou rouge du spectre.

7. Appareil selon la revendication 6, **caractérisé en ce que** :
- il comporte trois moyens d'exposition (R, G, B) et
- la lumière pouvant être émise par les diodes luminescentes en fonctionnement du premier moyen d'exposition (B) a une intensité maximale dans le domaine de longueurs d'ondes bleu du spectre,
- la lumière pouvant être émise par les diodes luminescentes en fonctionnement du deuxième moyen d'exposition (G) a une intensité maximale dans le domaine de longueurs d'ondes vert du spectre et
- la lumière pouvant être émise par les diodes luminescentes en fonctionnement du troisième moyen d'exposition (R) a une intensité maximale dans le domaine de longueurs d'ondes rouge du spectre.

8. Appareil selon l'une quelconque des revendications 1 à 7, **caractérisé en ce qu'**il comporte un modulateur de lumière (3) avec un grand nombre de domaines pouvant être commandés séparément, disposé de façon à ce que la lumière pouvant être émise par les diodes luminescentes (40a-40n, ..., 50a-50n) en fonctionnement soit dirigée vers ce modulateur de lumière (3).

9. Appareil selon la revendication 8, **caractérisé en ce que** le modulateur de lumière (3) est un dispositif appelé matrice à micromiroirs (DMD : Digital Micromirror Device).
